# EUROPEAN PATENT APPLICATION

(11) **EP 1 110 642 A2**
(43) Date of publication of application: **27.06.2001**
(21) Application number: 00830759.7
(22) Date of filing: 16.11.2000
(51) Int. Cl.: B21F 23/00

(54) **Feeder for longitudinal bars in the manufacture of welded laths**

(30) Priority: 14.12.1999 IT MO990277
(71) Applicant: Beta Systems S.r.L., 33030 Buia (Udine) (IT)
(72) Inventor: Celotti, Marco, 33030 Buia (Udine) (IT); Taboga, Ermanno, 33030 Buia (Udine) (IT)
(74) Representative: Gotra, Stefano

(57) **Abstract**

The device for feeding a plurality of side-by-side longitudinal bars (2) for the manufacture of welded laths comprises a horizontal conveyor plane (3) on which the bars (2) are arranged parallel to one another. A flexible and ring-wound transport plane (5), situated above the conveyor plane (3) and arranged perpendicular to the longitudinal bars (2) bears a plurality of gripping organs (7), each of which can receive a longitudinal bar (2) in a reception zone (6) and release the bar (2) into one of the seatings (4) afforded on the conveyor plane (3). The bars (2) are fed to the reception zone (6) by two vertical-axis screw conveyors (15). The device is usable in a machine for manufacturing electrowelded metal laths, for feeding the longitudinal bars (2) to a welding station where they will be welded to transversal bars.

## Description

Specifically, though not exclusively, the invention can be usefully applied in the field of a machine for manufacturing electrowelded laths, comprising a welding station provided with a row of welding devices, each of which can weld two bars arranged transversally with respect to one another. In these machines a plurality of longitudinal bars is fed to a welding station with the bars arranged side-by-side, in an advancement direction which is transversal to the
row of welding devices, so that each advancing bar can be sent to a respective welding device. The device of the invention can perform the feeding operation of the bars. A plurality of transversal bars is also fed into the welding station, to be welded to the other bars by the welding devices.

The main aim of the present invention is to provide a device by means of which the longitudinal bars, arranged side-by-side, can be fed to a welding station simply and economically.

An advantage of the invention is that it provides a device which enables the longitudinal bars to be fed with the bars arranged side-by-side at various distances which are predetermined for each single bar, so that specially-conformed laths can be produced without there being any need for cutting or other post-welding adjustments or rearrangements.

A further advantage is that the use of the invention enables work times and the physical exertion of the operator to be reduced, as well as leading to a considerable increase in productivity.

These aims and advantages and others besides are all achieved by the present invention, as it is characterised in the claims that follow.

Further advantages of the present invention will better emerge from the detailed description that follows of a preferred but non-exclusive embodiment of the invention, illustrated purely by way of non-limiting example in the accompanying figures of the drawings, in which:
figure 1 shows a schematic view in vertical elevation of a device made according to the present invention;
figure 2 shows an enlarged-scale detail of figure 1;
figure 3 shows a side-view of figure 2;
figure 4 shows a further enlarged detail of figure 1;
figure 5 shows a section made according to line V-V of figure 1.

With reference to the figures of the drawings, 1 denotes in its entirety a device for feeding a plurality of longitudinal bars 2 arranged side-by-side for the manufacture of welded laths. In particular, the device 1 can be used in a machine for manufacturing electrowelded metal laths.

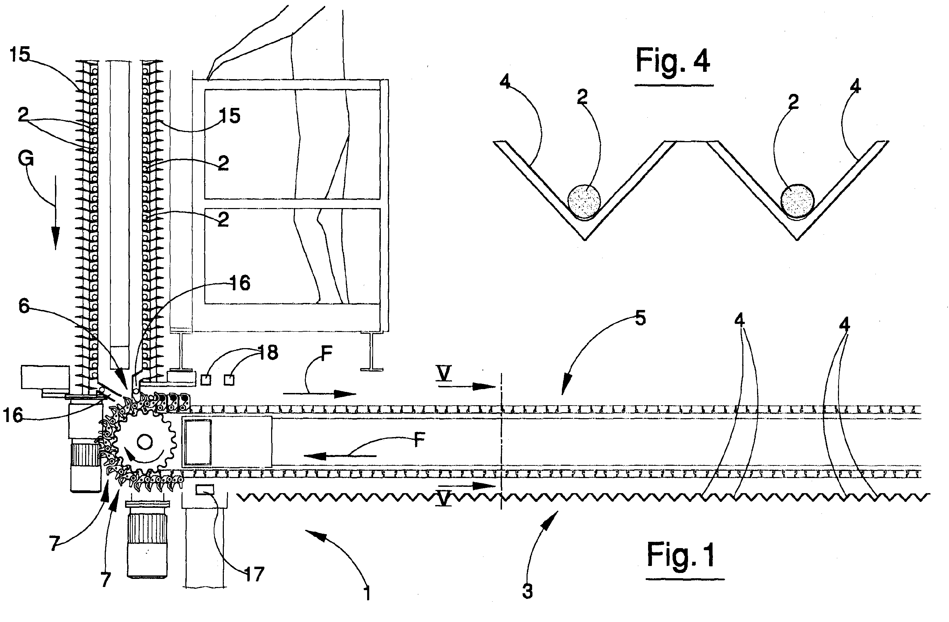

The device 1 comprises a horizontal conveyor plane 3 for the longitudinal bars, on which plane 3 the bars 2 are arranged parallel and side-by-side. The bars 2 are mobile along the conveyor plane 3, on command of means for movement which are known and not illustrated, in an advancement direction which is normal to the plane of the sheet of paper bearing figure 1.

The conveyor plane 3 is provided with a plurality of seatings 4, upwardly-concave, side-by-side at a predetermined reciprocal distance. Each seating 4 is destined to receive a respective longitudinal bar 2. In the illustrated case each seating 4 is basically v-shaped, as shown in figure 4. The distance between two adjacent seatings 4 is equal to a constant step distance, which normally corresponds to the breadth of each single link in the electrowelded lath. It is, however, possible to program production so that not each V-seating 4 is occupied by a bar 2, i.e. is empty, especially when a specially-conformed electrowelded lath is being manufactured.

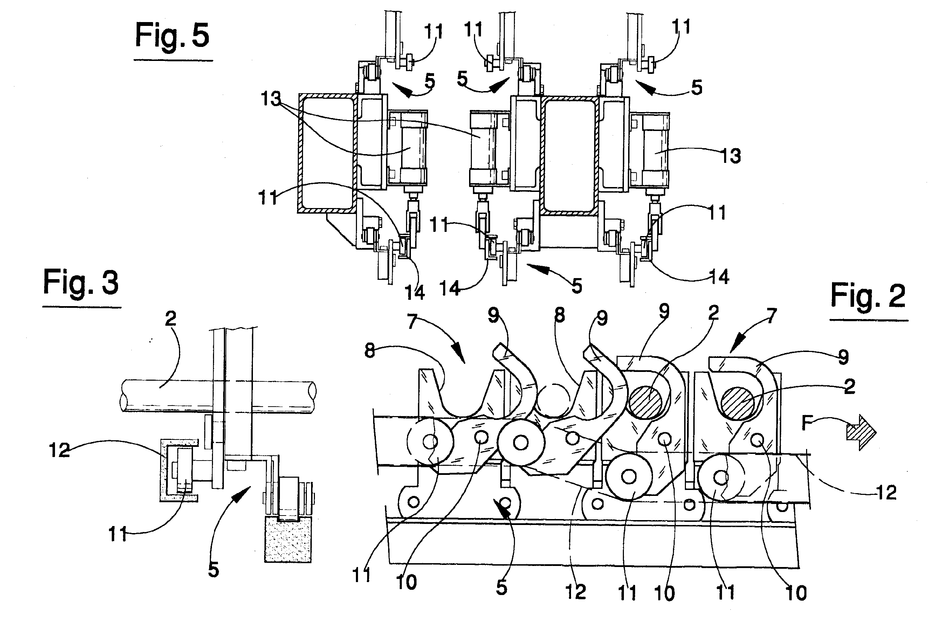

The device 1 further comprises a flexible transport plane 5, ring-wound and commandably slidable in the direction of arrows F, situated above the conveyor plane 3. The transport plane 5 is located above the conveyor plane 3 and is arranged perpendicular to the longitudinal bars 2 arranged on the conveyor plane 3 itself. Each transport plane 5 in the illustrated embodiment comprises a belt ring-wound about cogwheels. The illustrated device 1 is provided with a plurality of transport elements 5 (three in the present embodiment) arranged parallel and side-by-side, as shown in figure 5. The transport planes 5 work in unison to transport the bars 2 from a reception zone 6 to a conveyor plane 3, as will be more fully explained herein below.

Each transport plane 5 bears a plurality of gripping organs 7 arranged along the element itself at a predetermined reciprocal distance. In figure 1, for the sake of clarity, only a few of these gripping organs 7 have been illustrated. The step between two consecutive gripping organs is about the same as the step between the seatings 4 in the conveyor plane 3. Each gripping organ 7 receives a longitudinal bar 2 in the reception zone 6 and releases the bar 2 into one of the seatings 4 in the conveyor plane 3. In particular, each gripping organ 7 comprises a concave element 8 having an opening through which it can receive a longitudinal bar 2. Each concave element 8 is solidly constrained to a respective link of the chain constituting the transport plane 5. A commandably mobile closure element 9 is operatively associated to each opening, which closure element 9 can assume a closed position and an open position of the concave element 8. The closure element 9 comprises a rocker arm which is rotatable about a pivot 10. The support seating for the pivot 10 is solidly constrained to the concave element 8 associated to the closure element 9. Each closure element 9 has one curved closure end which in the closure position occupies the aperture of the concave element 8, preventing a bar 2 housed in the concave element 8 from exiting. The closure element 9 bears, on an opposite side to the closure end, a guide end which is associated during operation with means for guiding (illustrated in figures 2 and 3) predisposed along the transport plane 5, especially in the upper branch of the plane 5, so that the closure element 9 is open when at the reception zone 6 and controlledly closed when downstream of the reception zone. In this particular case the guide end comprises a roller 11 and the means for guiding comprise a guide rail 12 in which the rollers 11 of the various closure elements 9 are engaged and obliged to run. The guide rail 12 is made, in this embodiment, from a C-shaped element. Downstream of the reception zone 6 (downstream in relation to movement direction F of the transport planes) the guide rail 12 deviates (as shown in figure 2 by effect of which the various closure elements 9, moving in direction F, are automatically brought from the aperture position into the closure position by rotations about the pivots 10.

The device 1 further comprises means for actuating (illustrated in figure 5) predisposed to controlling simultaneous aperture of the closure elements 9 above the conveyor plane 3. These means for actuating comprise a plurality of actuators 13, each of which is operatively associated with a transport plane 5 and operates in the lower branch thereof. Each actuator 13 (for example a linear fluid actuator) is able to lower and raise a horizontal guide 14, comprising a c-shaped element, in which the roller at the end of the guide of each closure element 9 is engaged. When the horizontal guide 14 is in a raised position, the closure elements 9 are in a closure configuration; in this position the closure elements 9 support the bars 2 housed internally of the respective seatings 4 and in the concave elements 8, thus preventing the exit of the bars 2 from the gripping organs 7. When the horizontal guide 14 is moved into a lowered position, the closure elements 9 rotating about the pivots 10) move into an open position, so that the bars 2, no longer supported by the closure elements 9, can exit from the respective seatings in the gripping organs 7 and fall into the underlying seatings 4 in the conveyor plane 3.

The device 1 also comprises at least one conveyor predisposed to feed the longitudinal bars 2 into the reception zone 6. In the illustrated embodiment the conveyor comprises two vertical-axis screw conveyors 15, each of which transports the bars 2, arranged horizontally, in a vertical advancement plane G in a downwards direction. Each screw conveyor 15 singly feeds the bars 2 one by one into the respective seatings 4 constituted by the concave element 8 of the conveyor plane 3. Chutes 16 are arranged in the reception zone 6 for guiding the bars 2 and easing their entry into the seatings of the gripping organs 7.

Both the screw conveyors 15 and the transport plane 5 are synchronically controlled by a central control unit (of known type and not illustrated) of the device 1. Upstream of the reception zone 6 there is at least one sensor 17 predisposed to emit a signal to the central control unit should a fault arise and a bar 2 be present on the transport plane 5. At least one sensor 18 (preferably at least two) is located downstream of the reception zone 6 to signal to the central control unit when there is an unforeseen absence of a bar 2 in a seating 4 of the gripping organs 7, or the presence of a badly-positioned bar 2.

During operation the vertical screw conveyors 15 feed the bars 2 to the reception zone 6, where the bars 2 are received by the gripping organs 7 which, in the reception zone 6, have their concave elements 8 open in order to receive the bars 2. During this stage the transport plane 5 runs continuously in direction F and the bars 2 descend, also continuously, in direction G along the screw conveyors 15. The pre-programmed central control unit can leave some seatings 4 of the gripping organs 7 empty when a specially-conformed lath is to be manufactured. As the gripping organs 7 advance in direction F, in the upper branch the seatings of the gripping organs 7 are automatically closed by the closure elements 9 due to the effect of the deviation in the guide 12. Subsequently, continuing along the transport plane 5, when the gripping organs 7 pass into the lower branch of the conveyor plane 5, the organs 7 are stopped by the central control unit exactly above the conveyor plane 3 so that each bar 2 is vertically above a predetermined seating 4 in the conveyor plane 3. After this positioning operation, the gripping organs 7 are opened by the actuators 13, causing the bars 2 to fall onto the conveyor plane 3 and into the predetermined seatings 4. Following this, the longitudinal bars 2 are fed along the conveyor plane 3, by known-type means for advancing, towards a welding station, also of known type and not illustrated, in which the bars 2 are welded to transversal bars. The gripping organs 7 are then brought back to the reception zone 6, by means of another movement of the transport plane 5, and enter into a repeat work cycle.

## Claims

1. A device for feeding a plurality of longitudinal bars (2) placed side-by-side, in the manufacture of welded laths, characterised in that it comprises:
a horizontal conveyor plane (3) for transporting the longitudinal bars (2), on which conveyor plane (3) the bars (2) are arranged parallel to one another; the conveyor plane (3) affording a plurality of upwardly-concave seatings (4) arranged side-by-side and at a predetermined reciprocal distance, each seating (4) being destined to receive a longitudinal bar (2);
at least one flexible and ring-wound transport plane (5), situated above the conveyor plane (3) and arranged perpendicular to the longitudinal bars (2) arranged on the conveyor plane (3);
a plurality of gripping organs (7), borne on the transport plane (5) at a predetermined distance one from another, each of which gripping organs (7) can receive a longitudinal bar (2) in a reception zone (6) and release the bar (2) into one of the seatings (4);
at least one conveyor (15) for feeding the longitudinal bars (2) to the reception zone (6).

2. The device of claim 1, characterised in that each gripping organ (7) comprises a concave element (8) having an opening through which it can receive a longitudinal bar (2), the opening being closeable by a commandable mobile closure element (9).

3. The device of claim 2, characterised in that it comprises a guide (12) arranged along the transport plane (5) for guiding the closure element (9) in such a way that the closure element (9) is open at the reception zone (6) and closed downstream of the reception zone (6).

4. The device of claim 2 or 3, characterised in that it comprises means for actuating (13) predisposed to control a simultaneous opening of the closure elements (9) above the conveyor plane (3).

5. The device of any one of the preceding claims, characterised in that the at least one conveyor (15) comprises a screw conveyor.

6. The device of any one of the preceding claims, characterised in that the at least one conveyor (15) is controlled by a central control unit and is synchronised with the transport plane (5).
